# EUROPÄISCHE PATENTSCHRIFT

(11) **EP 0 985 140 B1**
(45) Veröffentlichungstag und Bekanntmachung des Hinweises auf die Patenterteilung: **15.09.2004**
(21) Anmeldenummer: 99917783.5
(22) Anmeldetag: 15.03.1999
(51) Int. Cl.: G01M 11/02

(54) **LINSEN-PRÜFGERÄT**
LENS TESTING DEVICE
APPAREIL D'ESSAI DE LENTILLES

(30) Priorität: 27.03.1998 DE 19813577; 28.05.1998 DE 19823844
(43) Veröffentlichungstag der Anmeldung: 15.03.2000
(73) Patentinhaber: Leica Camera AG, 35606 Solms (DE)
(72) Erfinder: KARBE, Peter, D-35638 Leun (DE); CREMA, Rolf, D-35630 Ehringshausen (DE); KÜHN, Joachim, D-35630 Ehringshausen (DE); HARAND, Bernd, D-35606 Solms (DE)
(74) Vertreter: Stamer, Harald
(86) Internationale Anmeldenummer: PCT/DE1999/000706
(87) Internationale Veröffentlichungsnummer: WO 1999/050636

(56) Entgegenhaltungen:
- US-A- 3 572 939
- PATENT ABSTRACTS OF JAPAN vol. 098, no. 008, 30. Juni 1998 (1998-06-30) & JP 10 068674 A (RICOH CO LTD), 10. März 1998 (1998-03-10)

## Beschreibung

Die Erfindung betrifft ein Linsen-Prüfgerät gemäß dem Oberbegriff des Anspruchs 1. Ein solches Prüfgerät ist aus der Druckschrift Patents Abstracts of Japan JP-A-09159575 bekannt.

Zur Beurteilung der optischen Abbildungsqualität von Foto-Objektiven und artverwandten optischen Systemen ist die Messung der Modulations-Transformations-Funktion (MTF) die am häufigsten verwendete quantitative Methode. Ein dazu geeignetes Objektiv-Prüfgerät ist z. B. aus Optical Shop Testing, edited by Daniel Malacara, Verlag John Wiley & Sons Inc., Second Edition, (1992), Seite 421, bekannt. Mit einem Kollimator-Objektiv wird ein rückseitig beleuchteter Spalt oder ein Loch (Punkt) nach unendlich projiziert. Der Objektiv-Prüfling bildet den Spalt oder das Loch in seine Brennebene ab. Die Kollimatorbrennweite ist in der Regel größer als die des Prüflings, so daß es sich um eine verkleinernde Abbildung handelt, die erst durch Nachvergrößerung mit Hilfe eines Mikroskop-Objektivs ausgewertet werden kann.

Nach dem gleichen Prinzip arbeiten Brennweitenmeßgeräte, bei denen der Spalt z. B. durch einen Doppelspalt ersetzt wird. Über die Messung der Vergrößerung des Doppelspalt-Bilds kann die Brennweite des Prüflings ermittelt werden.

Zur Messung der Abbildungseigenschaften (MTF) oder der Brennweite (Verzeichnung) im Bildfeld (Bildhöhen ≠ 0) muß der Prüfling entsprechend dem Bildwinkel geschwenkt werden und das nachvergrößernde MikroskopObjektiv zum Bildpunkt nachgeführt werden.

Eine dazu geeignete Prüfvorrichtung ist in DE 38 42 144 A1 beschrieben. Ein rückseitig beleuchtetes Testobjekt wird über die Austrittslinse einer Beleuchtungseinrichtung nach Unendlich abgebildet. Die Beleuchtungseinrichtung kann relativ zum Prüfling geschwenkt werden. Der Prüfling ist um seine optische Achse drehbar gelagert. Die von dem Prüfling erzeugte Abbildung des Testobjekts wird über ein Mikroskopobjektiv auf ein CCD-Flächenarray abgebildet und über eine Bildverarbeitungsanlage ausgewertet. Die Bildaufnahme-Einrichtung ist senkrecht zur optischen Achse des Prüflings verschiebbar angeordnet.

Nach dem gleichen Prinzip ist die in Patent Abstracts of Japan JP-A-09281002 beschriebene Prüfvorrichtung aufgebaut. Als Prüfling ist ein afokales Linsensystem vorgesehen. Die Beleuchtungseinrichtung und die Detektionseinrichtung sind relativ zum Prüfling schwenkbar.

Aus Patent Abstracts of Japan JP-A-09159575 ist eine Prüfvorrichtung bekannt, bei der der Prüfling direkt das rückseitig beleuchtete Testobjekt in eine Zwischenbildebene abbildet, aus der heraus es über ein abbildendes Objektiv auf eine Detektoreinrichtung abgebildet wird. Der Prüfling ist um seine optische Achse drehbar gelagert. Das abbildende Objektiv und die Detektoreinrichtung sind zu einer Einheit zusammengefaßt und an einem Stativ befestigt. Die Beleuchtungseinrichtung mit demTestobjekt und die Halterung für den Prüfling sind jeweils zu weiteren Einheiten zusammengefaßt, die ebenfalls an dem Stativ in fester Ausrichtung zueinander befestigt sind.

Eine solche Anordnung ist mit ihren wesentlichen Elementen auch aus Leitz-Mitteilungen für Wissenschaft und Technik, (1970), Bd. V, Heft 1, S. 3-12,Fig. 5, bekannt.

Aus US 5,221,834 ist eine Prüfvorrichtung bekannt, bei der der Prüfling ein rückseitig beleuchtetes Testobjekt in eine Zwischenbildebene abbildet, aus der es über eine erste Hilfsoptik zunächst nach Unendlich abgebildet wird. In das Parallelstrahlenbündel werden Aperturblenden eingefügt, und eine zweite Hilfsoptik erzeugt dann eine endliche Abbildung auf einem Detektor.

Die bei den bekannten Geräten vorliegende zweistufige Abbildung bedingt einen hohen technischen Aufwand, der sich bei MTF-Anwendungen besonders im räumlichen Platzbedarf widerspiegelt. Die Meßgenauigkeit hängt sehr stark von der Abbildungsqualität des Mikroskop-Objektivs ab. Für Messungen im Bildfeld sind die Anforderungen an diese Relayoptik besonders hoch, da aufgrund des Meßprinzips die Apertur nur partiell genutzt wird.

Der Erfindung lag die Aufgabe zugrunde, ein universell verwendbares Linsen-Prüfgerät für unterschiedliche Tests an Foto- und Video-Objektiven zu schaffen, das einen kompakten Aufbau besitzt und dessen Meßgenauigkeit verbessert ist.

Diese Aufgabe wird bei einem Linsen-Prüfgerät der eingangs genannten Art erfindungsgemäß dadurch gelöst, daß der Linsen-Prüfling ein Objektiv-Prüfling ist, daß das Testobjekt in der Brennebene des Objektiv-Prüflings innerhalb der Halterung angeordnet ist, daß das abbildende Objektiv ein Kollimator-Objektiv ist, wobei die Detektoreinrichtung in der Brennebene des Kollimator-Objektivs angeordnet ist, daß entweder die Halterung oder die Einheit an dem Stativ schwenkbar gelagert ist und daß die Halterung und die Einheit relativ zueinander schwenkbar sind. Es ergibt sich dadurch eine einstufige, vergrößernde Abbildung des Testobjekts. Das Bild kann über eine Beobachtungseinrichtung ausgewertet werden. Für Messungen im Bildfeld kann entweder die Halterung mit dem Prüfling oder die Einheit mit der Beobachtungseinrichtung geschwenkt werden. Es ist es vorteilhaft, wenn das Testobjekt innerhalb der Halterung relativ zur Ebene der Aufnahme des Objektiv-Prüflings verstellbar angeordnet ist.

Für weitere Messungen im Bildfeld ist die Aufnahme des Objektiv-Prüflings in der Halterung drehbar gelagert. Als Beobachtungseinrichtung kann eine CCD-Kamera vorgesehen sein, deren aufgenommenes Bild einem Monitor zur visuellen Beurteilung zugeführt werden kann. Für eine automatische Meßauswertung ist es möglich, eine elektronische Bildauswerteeinrichtung nachzuschalten, die die Meßauswertung mit bildanalytischen Methoden durchführt.

In der Zeichnung ist der erfindungsgemäße Aufbau des Linsen-Prüfgeräts schematisch dargestellt.

Dabei zeigt
- Fig. 1: die Anordnung zur Messung auf der Achse des Prüflings,
- Fig. 2: die Anordnung zur Messung im Bildfeld des Prüflings mit geschwenkter Halterung und
- Fig. 3: die Anordnung zur Messung im Bildfeld des Prüflings mit geschwenkter Beobachtungseinheit.

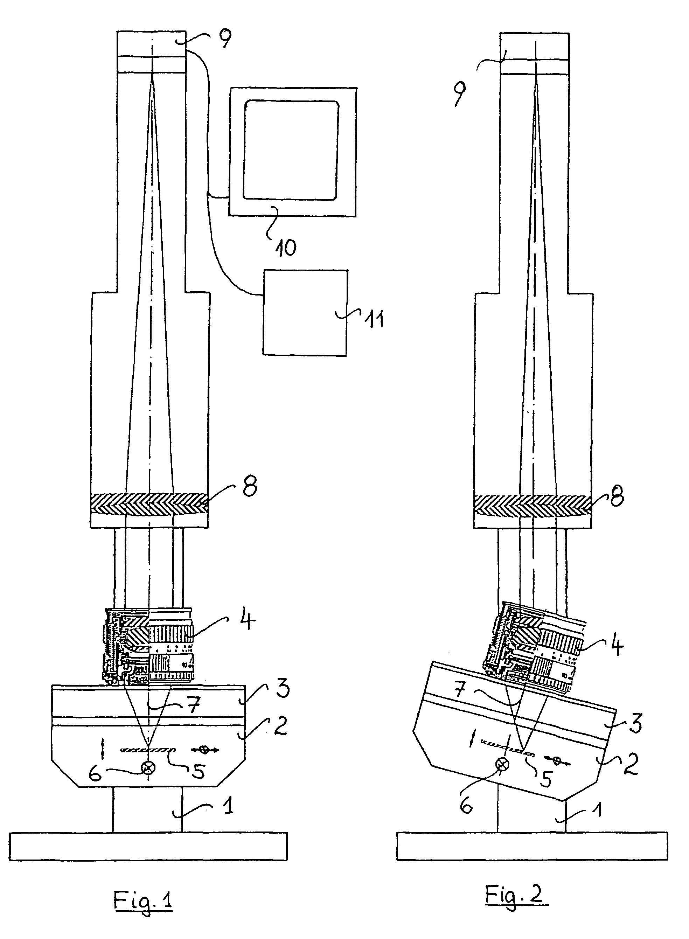

Fig. 1 zeigt an einem Stativ 1 eine Halterung 2 mit einer Aufnahme 3 für einen Objektiv-Prüfling 4. Innerhalb der Halterung 2 ist ein Testobjekt 5 auf einem nicht dargestellten Schlitten angeordnet. Das Testobjekt besteht z. B. aus einer planparallelen Glasplatte, auf der unterschiedliche Teststrukturen. wie Linien- oder Lochraster, aufgebracht sind. Diese Strukturen werden über eine Lichtquelle 6 im Durchlicht beleuchtet und durch den Prüfling 4 nach unendlich projiziert. Das Testobjekt ist längs der optischen Achse 7 des Prüflings 4 verstellbar, um es auf die Brennebene des Prüflings 4 einstellen zu können. Diese Einstellung kann über einen Motorantrieb automatisch in Abhängigkeit von Autofokussignalen geschehen.

Das Testobjekt ist vorzugsweise auswechselbar auf dem Schlitten angeordnet. Auf dem Testobjekt können aber auch mehrere Testfelder mit unterschiedlichen Strukturen aufgebracht sein. In dem Fall ist das Testobjekt mit dem Schlitten zusätzlich auch senkrecht zur optischen Achse 7 verschiebbar gelagert. Die Verstellrichtungen sind durch Pfeile angedeutet. Die mechanische Konstruktion solcher Schlitten wird als bekannt vorausgesetzt und ist nicht Gegenstand der Erfindung. Die Verstellungen des Schlittens können manuell oder motorisch nach einem vorgegebenen Testprogramm erfolgen.

Durch ein Kollimator-Objektiv 8, dessen Brennweite größer als die des Prüflings 4 sein sollte, wird das vom Prüfling 4 aufgenommene Bild des Testobjekts 5 auf eine CCD-Kamera 9 abgebildet. Das Kollimator-Objektiv 8 und die CCD-Kamera 9 sind zweckmäßigerweise in einem Gehäuse 12 als Einheit angeordnet, um störendes Umgebungslicht von der Kamera fernzuhalten. Da es sich um eine vergrößernde Abbildung handelt, können die abgebildeten Strukturen ohne zusätzliche Nachvergrößerung ausgewertet werden. Eine erste Auswertung kann darin bestehen, in Abhängigkeit von der Verstellung des Testobjekts längs der optischen Achse für eine gegebene Ortsfrequenz die Ebene mit maximalem Bildkontrast zu ermitteln. Aus dem gemessenen Kontrastverlauf können Autofokussignale für eine motorische Einstellung des Testobjekts in der Brennebene des Prüflings 4 abgeleitet werden. Das Format der CCD-Kamera 9 ist in der Regel kleiner oder gleich dem Aufnahmeformat des Prüflings 4, so daß in Abhängigkeit von der Vergrößerung immer nur ein Ausschnitt des vollen Bildformats des Prüflings 4 erfaßt wird.

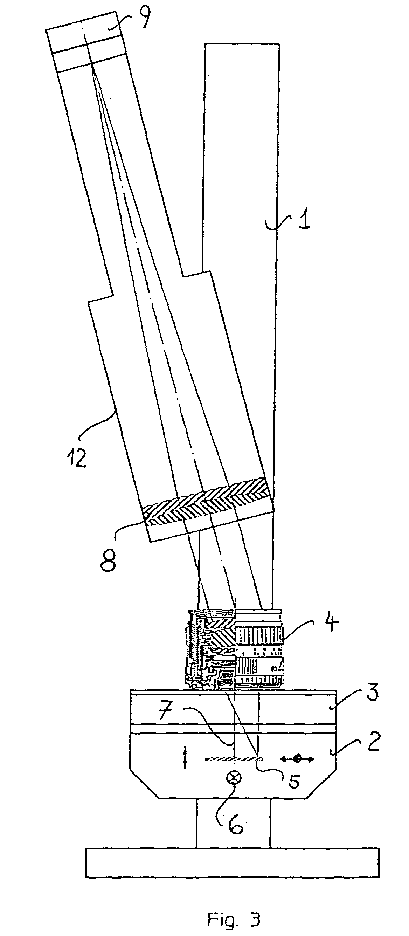

Um den Prüfling 4 im Bildfeld beurteilen zu können, wird er zusammen mit dem Testobjekt 5 und der Lichtquelle 6 mit der Halterung um seine Eintrittspupille entsprechend dem zu beurteilenden Bildwinkel geschwenkt. Der Kippwinkel kann gemessen und angezeigt werden. Der geschwenkte Zustand ist in Fig. 2 dargestellt. Alternativ kann auch das Gehäuse 12 mit dem Kollimator-Objektiv 8 und der CCD-Kamera 9 geschwenkt werden, wie in Fig. 3 dargestellt. Zur Beurteilung des gesamten Bildkreises muß der Prüfling 4 dann nur noch um seine optische Achse 7 gedreht werden. Dazu ist die Aufnahme 3 als Drehtisch auf der Halterung 2 ausgebildet. Der Prüfling bleibt bei der Messung in seiner Aufnahme 3 fixiert.

Die von der CCD-Kamera 9 aufgenommenen Strukturen werden in Bildsignale umgewandelt und können entweder auf einem Monitor 10 zur visuellen Auswertung dargestellt werden. Sie können aber auch einer elektronischen Bildauswerteeinrichtung 11 zur bildanalytischen Auswertung zugeführt werden. Eine dazu geeignete Software wird z. B. von der Firma OEG GmbH, Frankfurt (Oder), unter der Bezeichnung COMEF-MTF angeboten. Das Kollimator-Objektiv 8 ist für den zu untersuchenden Spektralbereich und für die Abbildung unendlich entfernter Objekte optimal korrigiert. Die in der Bildebene der CCD-Kamera entstehenden Bildfehler sind daher direkt dem Prüfling 4 zuzuordnen. Dabei sind unterschiedlichste Tests an dem Prüfling 4 möglich.

Der Sterntest erlaubt eine qualitative Bewertung. Dazu wird ein Lochraster mit kreisrunden Löchern von 2-5 µm Durchmesser als Testobjekt 5 durch den Prüfling 4 abgebildet. Die qualitativen Aussagen betreffen den Zentrierzustand des Prüflings. Dieses Testverfahren ist im Bereich der Mikroskopie üblich. Ebenso können einzelne Bildfehler durch die Punktabbildung analysiert werden.

MTF-Messungen benutzen die Abbildung einer Kante. Aus dem analysierten Kantenbild kann die MTF des Prüflings bis zu einer vergrößerungsabhängigen maximalen Ortsfrequenz berechnet werden.

Mit Hilfe der MTF-Messung kann die "Beste Einstellebene" des Prüflings ermittelt werden, bei der eine bestimmte Ortsfrequenz mit maximalem Kontrast abgebildet wird. Hierfür wird der Kontrastverlauf in Abhängigkeit von einzelnen Fokuspositionen des Prüflings 4 gemessen.

Die Brennweite des Prüflings läßt sich bestimmen, indem die Vergrößerung eines auf dem Testobjekt bekannten Rasterabstandes gemessen wird. Das Verhältnis aus bekannter Kollimator-Brennweite und Vergrößerung ergibt die Brennweite des Prüflings.

Ebenso kann die Vergrößerung im Bildfeld bestimmt werden. Aus dem Verhältnis der in der Bildmitte zu der im Bildfeld gemessenen Vergrößerung ergibt sich unter Berücksichtigung des Kippwinkels die Verzeichnung.

Die angegebenen Tests sind an sich bekannt.

In dem dargestellten Ausführungsbeispiel ist das Stativ 1 senkrecht aufgestellt. Der gesamte Aufbau läßt sich jedoch auch horizontal anordnen.

## Patentansprüche

1. Linsen-Prüfgerät mit einem Linsen-Prüfling (4) und einer an einem Stativ (1) angebrachten Halterung (2) zur Aufnahme des Linsen-Prüflings (4), mit einem rückseitig beleuchteten Testobjekt (5), mit einem abbildenden Objektiv (8) und mit einer Detektoreinrichtung (9) zur Auswertung des Bildes des Testobjekts (5),
wobei das abbildende Objektiv (8) mit der Detektoreinrichtung (9) zu einer Einheit (12) zusammengefaßt ist, **dadurch gekennzeichnet, daß**
- der Linsen-Prüfling ein Objektiv-Prüfling (4) ist, daß
- das Testobjekt (5) in der Brennebene des Objektiv-Prüflings (4) innerhalb der Halterung (2) angeordnet ist, daß
- das abbildende Objektiv (8) ein Kollimator-Objektiv ist, wobei die Detektoreinrichtung in der Brennebene des Kollimator-Objektivs angeordnet ist, daß
- entweder die Halterung (2) oder die Einheit (12) an dem Stativ (1) schwenkbar gelagert ist und daß
- die Halterung (2) und die Einheit (12) relativ zueinander schwenkbar sind.

2. Linsen-Prüfgerät nach Anspruch 1, **dadurch gekennzeichnet, daß** das Testobjekt (5) innerhalb der Halterung (2) relativ zur Ebene einer Aufnahme (3) des Objektiv-Prüflings (4) verstellbar angeordnet ist.

3. Linsen-Prüfgerät nach Anspruch 2, **dadurch gekennzeichnet, daß** die Aufnahme (3) des Objektiv-Prüflings (4) auf der Halterung (2) drehbar gelagert ist.

4. Linsen-Prüfgerät nach Anspruch 1, **dadurch gekennzeichnet, daß** als Detektoreinrichtung (9) eine CCD-Kamera vorgesehen ist.

5. Linsen-Prüfgerät nach Anspruch 4, **dadurch gekennzeichnet, daß** der CCD-Kamera eine elektronische Bildauswerteeinrichtung (11) nachgeschaltet ist.

6. Linsen-Prüfgerät nach Anspruch 1, **dadurch gekennzeichnet, daß** die Brennweite des Kollimator-Objektivs (8) größer als die des Objektiv-Prüflings (4) gewählt ist.

## Claims

1. Lens testing apparatus with a lens test piece (4) and a holder (2), which is mounted at a stand (1), for receiving the lens test piece (4), with a test object (5) illuminated at the rear side, with an imaging objective (8) and with a detector device (9) for evaluating the image of the test object (5), wherein the imaging objective (8) is combined with the detector device (9) to form a unit (12), **characterised in that**
- the lens test piece is an objective test piece (4),
- the test object (5) is arranged in the focal plane of the objective test piece (4) within the holder (2),
- the imaging objective (8) is a collimator objective, wherein the detector device is arranged in the focal plane of the collimator objective,
- either the holder (2) or the unit (12) is pivotably mounted at the stand (1) and
- the holder (2) and the unit (12) are pivotable relative to one another.

2. Lens testing apparatus according to claim 1, **characterised in that** the test object (5) is arranged within the holder (2) to be adjustable relative to the plane of a mount (3) of the objective test piece (4).

3. Lens testing apparatus according to claim 2, **characterised in that** the mount (3) of the objective test piece (4) is rotatably mounted on the holder (2).

4. Lens testing apparatus according to claim 1, **characterised in that** a CCD camera is provided as detector device (9).

5. Lens testing apparatus according to claim 4, **characterised in that** an electronic image evaluating device (11) is connected downstream of the CCD camera.

6. Lens testing apparatus according to claim 1, **characterised in that** the focal width of the collimator objective (8) is selected to be greater than that of the objective test piece (4).

## Revendications

1. Appareil de contrôle de lentilles avec un objet à lentilles à contrôler (4) et une fixation (2) disposée sur un trépied (1), pour le logement d'un objet à lentilles à contrôler (4), avec un objet de test (5) éclairé par derrière, avec un objectif (8) de reproduction et avec un dispositif de détection (9) pour l'analyse de l'image de l'objet de test (5), moyennant quoi l'objectif de reproduction (8) est assemblé avec le dispositif de détection (9) en une unité (12), **caractérisé en ce que**
- l'objet à lentilles à contrôler est un objectif (4)
- l'objet de test (5) se trouve dans le plan focal de l'objectif à contrôler (4) à l'intérieur de la fixation (2),
- l'objectif de reproduction (8) est un objectif à collimateur, moyennant quoi le dispositif de détection se trouve dans le plan focal de l'objectif à collimateur,
- soir la fixation (2) soit l'unité (12) est logée de manière pivotante sur le trépied (1) et
- la fixation (2) et l'unité (12) sont pivotants l'une par rapport à l'autre.

2. Appareil de contrôle de lentilles selon la revendication 1, **caractérisé en ce que** l'objet de test (5) est disposé à l'intérieur de la fixation (2) de manière réglable par rapport au plan d'un logement (3) de l'objectif à contrôler (4).

3. Appareil de contrôle de lentilles selon la revendication 2, **caractérisé en ce que** le logement (3) de l'objectif à contrôler (4) est logé de manière rotative sur la fixation (2).

4. Appareil de contrôle de lentilles selon la revendication 1, **caractérisé en ce que**, comme dispositif de détection (9) une caméra CCD est prévue.

5. Appareil de contrôle de lentilles selon la revendication 4, **caractérisé en ce qu'**un dispositif d'analyse d'image électronique (11) est branché en aval de la caméra CCD.

6. Appareil de contrôle de lentilles selon la revendication 1, **caractérisé en ce que** la focale de l'objectif à collimateur (8) est supérieure à celle de l'objectif à contrôler (4).
